# FASCICULE DE BREVET EUROPEEN

(11) **EP 2 042 452 B1**
(45) Date de publication et mention de la délivrance du brevet: **01.12.2010**
(21) Numéro de dépôt: 08300272.5
(22) Date de dépôt: 25.09.2008
(51) Int. Cl.: B65G 47/90, B65G 61/00

(54) **Dispositif pour désempiler des claies enchevêtrées disposées en quinconce**
Vorrichtung zum Abtragen von ineinander verkeilten, versetzt angeordneten Gitterroste
Device for destacking framed racks arranged in staggered formation

(30) Priorité: 26.09.2007 FR 0757872
(43) Date de publication de la demande: 01.04.2009
(73) Titulaire: Saint Etienne Automation, 42000 Saint-Etienne (FR)
(72) Inventeur: Henry, Hervé, 42160 Andrezieux Bouthen (FR); Reynard, Julien, 63160 Montmorin (FR)
(74) Mandataire: Thivillier, Patrick

(56) Documents cités:
- EP-A- 1 710 178
- EP-A- 1 716 988
- DE-U1-202005 017 559
- FR-A- 2 576 005

## Description

L'invention se rattache au secteur technique de la manipulation et du transfert de produits empilés.

Plus particulièrement, l'invention concerne un dispositif pour désempiler des claies enchevêtrées et disposées en quinconce selon le préambule de la revendication 1.

L'invention trouve une application avantageuse, mais non limitative, pour les claies utilisées dans l'agroalimentaire, notamment celles utilisées lors de processus de fabrication de certains fromages. Généralement, ces claies sont constituées par une grille en éléments filiformes délimitant une surface d'appui de forme générale rectangulaire. Le plus souvent, deux côtés opposés de la grille présentent, à chaque extrémité, des zones de préhension sous forme d'un anneau débordant formé dans le prolongement des bords latéraux ou transversaux de la grille. A partir de ces anneaux, sont formés des pieds de hauteur réduite et également réalisés à partir d'éléments filiformes.

Ces claies sont parfaitement connues et correspondent à des normes standard.

Généralement, ces claies sont empilées les une sur les autres avant d'être transférées une à une sur, par exemple, un convoyeur que peut présenter une partie d'une installation de fabrication des fromages. Il convient donc de saisir la claie qui apparaît à la partie supérieure de la pile, afin de la transférer, par exemple, sur le convoyeur. Un tel transfert peut s'effectuer de manière manuelle, auquel cas il n'y a pas de problème particulier de désempilage. Par contre, cette opération manuelle n'est pas adaptée dans le cadre de chaînes de fabrication ayant une forte capacité de production.

Des solutions ont été proposées pour permettre de désempiler automatiquement les claies. Un tel désempilage automatique ne pose pas de problème particulier lorsque les claies sont régulièrement empilées en hauteur, selon un alignement précis, par exemple au niveau des différents pieds.
Toutefois, cette méthode d'empilage ne donne pas toujours satisfaction étant donné qu'elle nécessite une place en hauteur relativement importante diminuant par conséquent le nombre de claies susceptibles de constituer la pile. On observe également des risques d'instabilité de la pile ainsi réalisée.

Le document FR-A-2576005 décrit un dispositif de dépalletisation de caisses.

Pour ces différents raisons, les claies sont le plus souvent empilées, en quinconce, en étant enchevêtrées les unes dans les autres permettant de réduire, d'une manière significative, l'espace en hauteur et, par conséquent, empiler un nombre de claies important.
Par contre, cet enchevêtrement en quinconce des claies, pose de réels problèmes pour les désempiler d'une manière automatique. En effet, il est nécessaire de rechercher la position de la claie supérieure compte tenu du mode d'empilage en quinconce et de la dispersion importante du positionnement relatif des différentes claies.

On observe également que cet enchevêtrement génère une résistance d'emboîtement nécessitant une extraction des claies selon une trajectoire déterminée.

A partir de cet état de la technique et des inconvénients en résultant, un problème que se propose de résoudre l'invention est de pouvoir désempiler, d'une manière entièrement automatique, des claies enchevêtrées disposées en quinconce, d'une manière simple, sure, efficace et rationnelle, et de pouvoir repérer, dans l'espace, les deux claies supérieures pour permettre la préhension de la claie supérieure seulement.

Pour résoudre un tel problème, il a été conçu et mis au point un dispositif pour désempiler des claies enchevêtrées disposées en quinconce selon la revendication 1.

Un autre problème que se propose de résoudre l'invention est de pouvoir déposer, d'une manière très précise, la claie saisie par le robot manipulateur.
Pour résoudre un tel problème, le système de vision comprend une autre caméra disposée dans une zone où doit être positionnée et déchargée la claie préalablement saisie.

L'invention trouve une application particulièrement avantageuse dans le cas de claies où la zone de préhension de chaque claie est constituée par des anneaux débordants à partir desquels sont formés des pieds, lesdits anneaux étant positionnés à chaque extrémité de l'un au moins des côtés de la claie.

Pour résoudre le problème posé de dégager la claie supérieure, compte tenu de sa position d'enchevêtrement, les moyens aptes à soulever la claie sont constitués par des crochets disposés sur une barre support selon un entraxe correspondant à l'écartement des pieds des claies, lesdits crochets coopérant avec les anneaux que présente en débordement chaque pied, la barre étant montée en bout du bras du robot manipulateur.

Avantageusement, la barre support est montée en bout du bras avec capacité de pivotement.

Selon une autre caractéristique et en fonction de la trajectoire de la claie saisie pour son transfert depuis la pile de stockage jusqu'à son endroit de positionnement, les crochets sont combinés avec des mâchoires faisant office de pinces aptes à enserrer la section de chaque pied.

Selon une autre caractéristique et dans une forme de réalisation préférée, le robot est assujetti à un ensemble de commande et de programmation pour soumettre la tête manipulatrice, à la trajectoire suivante :
- crochetage de la claie supérieure ;
- soulèvement de ladite claie ;
- transfert de la claie saisie vers un poste prédéterminé ;
- dépose de la claie audit poste.

Avantageusement, le transfert de la claie s'effectue par pivotement et retournement après serrage des pinces.

L'invention est exposée ci-après plus en détail à l'aide des figures des dessins annexés dans lesquels :
- la figure 1 est une vue en plan à caractère schématique d'un exemple non limitatif d'une installation équipée du dispositif de transfert de claies, selon l'invention ;
- la figure 2 est une vue en perspective montrant la préhension de la claie supérieure ;
- la figure 3 est une vue partielle de détail correspondant à la figure 2.

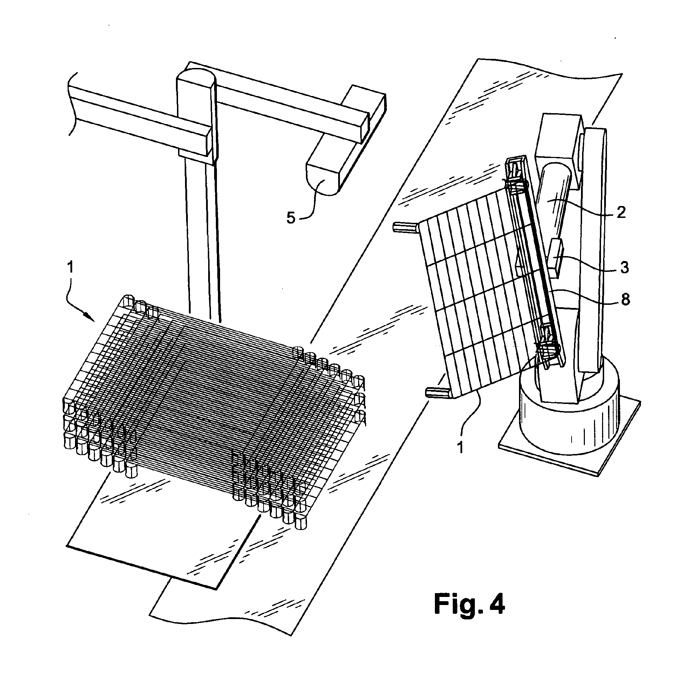

- La figure 4 montre le transfert de la claie supérieure saisie ;
- La figure 5 est une vue partielle en perspective montrant le serrage des pinces ;
- La figure 6 est une vue en perspective montrant plus particulièrement le transfert par pivotement de la claie saisie ;
- Les figures 7, 8, 9 et 10 sont des vues partielles en perspective montrant les principales phases de fonctionnement du dispositif, à savoir :

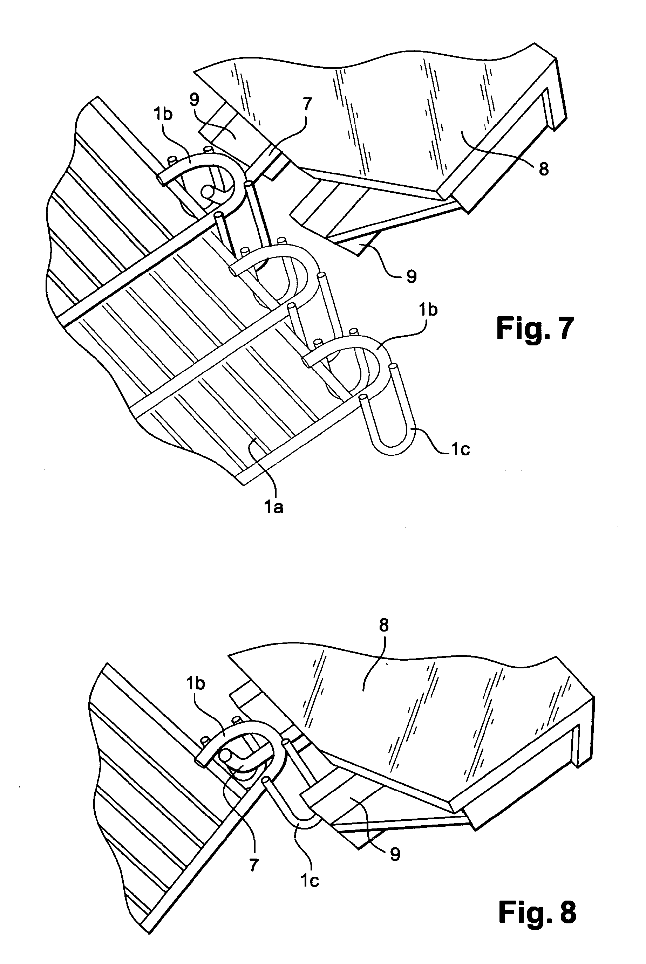

   - figure 7 : crochetage de la claie supérieure,
   - figure 8 : soulèvement de la claie saisie,

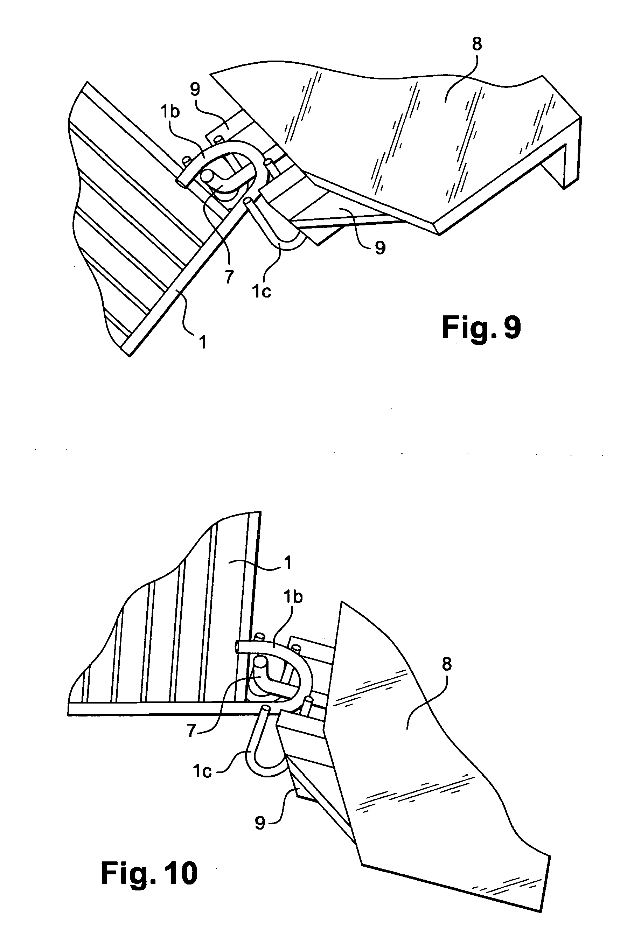

   - figure 9 : serrage des pinces,
   - figure 10 : transfert de la claie saisie.

Comme indiqué, l'invention trouve une application avantageuse pour désempiler des claies (1) enchevêtrées et disposées en quinconce. D'une manière parfaitement connue pour un homme du métier, chaque claie (1) est constituée par une grille (1a) réalisée en éléments filiformes constituant un plateau support en tant que tel, de forme générale notamment rectangulaire.

Deux côtés opposés de la claie présente, à chacune de leur extrémité libre, des anneaux (1b) à partir desquels sont formés des pieds (1c) également en éléments filiformes de hauteur réduite.

Comme indiqué, les claies sont empilées d'une manière enchevêtrées et en quinconce, de sorte que les pieds (1c) des différentes claies empilées ne sont pas alignés. On renvoie aux figures des dessins qui montrent un exemple d'enchevêtrement de claies empilées.

Selon l'invention, le dispositif pour désempiler les claies ainsi enchevêtrées comprend, en combinaison, un robot manipulateur (2) assujetti à un système de vision optique. Plus particulièrement, le système de vision est conformé pour détecter, d'une part, la claie disposée à la partie supérieure de la pile et, d'autre part, une zone de préhension de ladite claie afin de commander le robot (2) dont la tête manipulatrice (3) est équipée de moyens (4) aptes à crocheter et à soulever ladite claie à partir de ladite zone de préhension.

Avantageusement, la zone de préhension est constituée par les anneaux (1b) à partir desquels sont formés les pieds (1c).

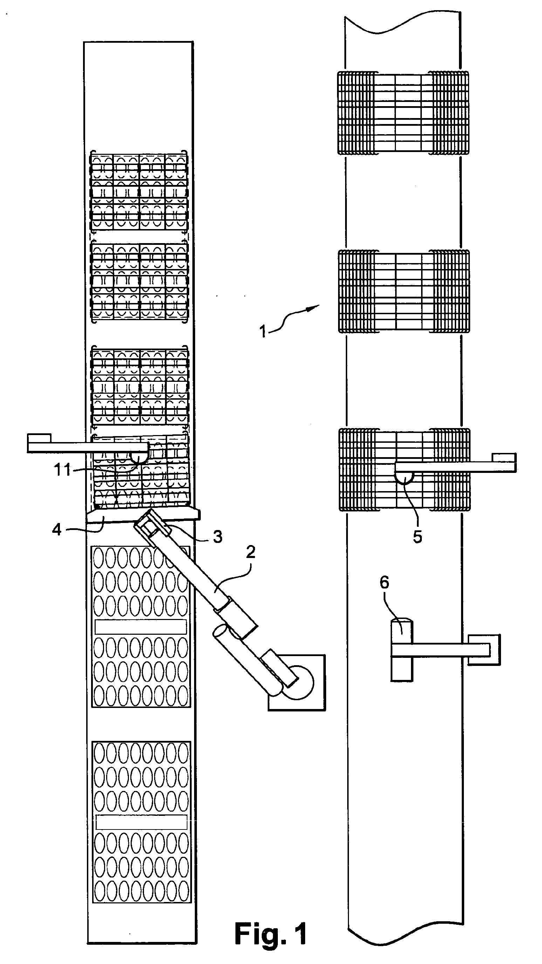

Comme le montre la figure 1, le système de vision comprend une caméra (5) convenablement positionnée pour balayer le dessus de la pile afin de rechercher la claie supérieure. Une autre caméra (6) est convenablement positionnée pour balayer la face de la pile des claies comportant les anneaux (1b) de préhension afin de rechercher la claie immédiatement inférieure à la claie supérieure. Autrement dit, les deux caméras (5) et (6) sont disposées dans deux plans orthogonaux.

L'éclairage est étudié pour permettre une extraction des contours des claies conformes aux exigences de l'application. Le traitement d'image permet de détecter la position des claies en hauteur et en longueur.

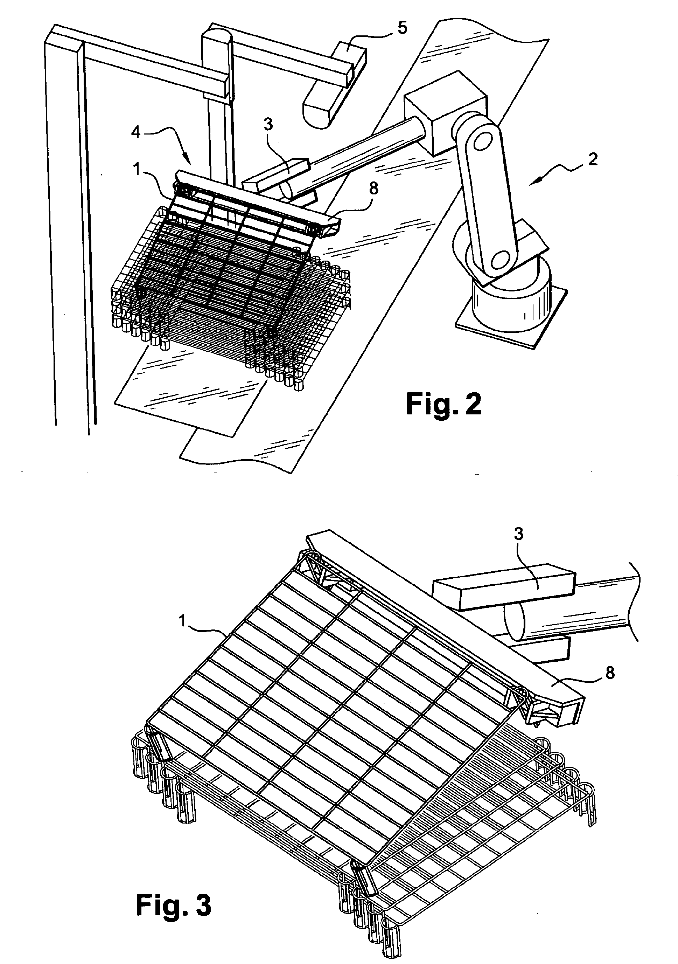

Après avoir identifié les zones de préhension de la claie supérieure (les anneaux (1b)), le robot manipulateur (2) assure la préhension de la claie supérieure. Dans ce but, les moyens que présente la tête manipulatrice du robot pour soulever la claie supérieure, sont constitués par des crochets (7) disposés sur une barre support (8) selon un entraxe correspondant à l'entraxe des anneaux (1b). Ces crochets (7) coopèrent avec les anneaux (1b) pour permettre de soulever la claie supérieure et, par conséquent, de la dégager à partir d'une de ses extrémités de la claie immédiatement inférieure (figures 2, 3, 5 et 6).

La barre support (8) équipée des crochets (7) est montée en bout de la tête du bras du robot manipulateur (2), afin de soumettre ladite barre aux différents mouvements auxquels est assujettie, d'une manière classique, la tête du robot. Avantageusement, la barre support est montée en bout du bras avec capacité de pivotement, comme il sera indiqué dans la suite de la description.

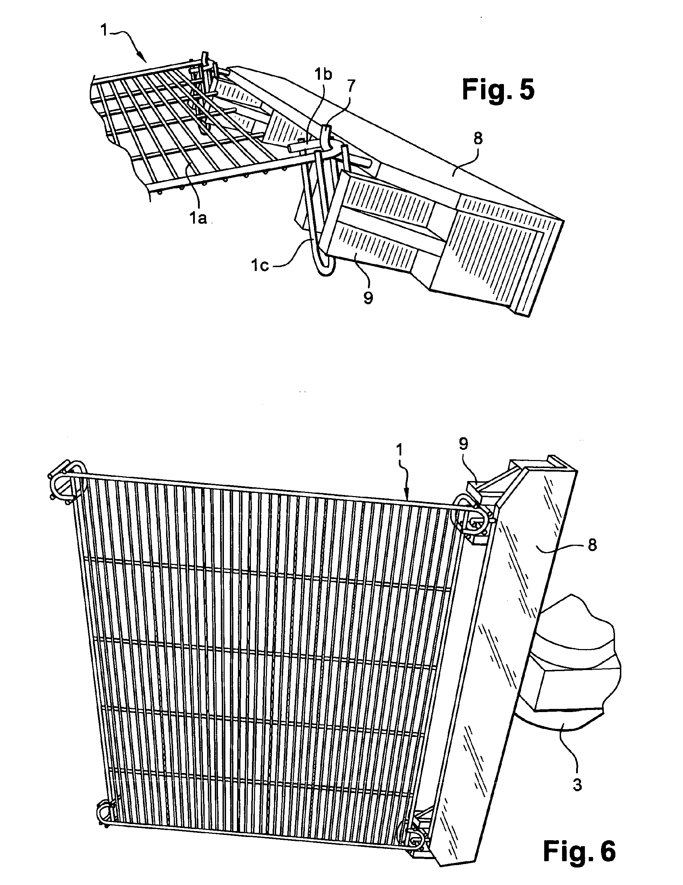

On voit aux figures des dessins, notamment à la figure 5 qui montre, qu'après soulèvement de la claie supérieure, cette dernière pivote par rapport aux crochets (7) engagés dans les anneaux (1b), de sorte que les pieds (1c) viennent en appui contre une partie de la barre support (8).

Après soulèvement, le bras de manipulation du robot permet de dégager totalement la claie supérieure de la pile.

A partir de cette position de dégagement, le bras manipulateur peut transférer la claie saisie dans un plan sensiblement horizontal afin de la dégager de la pile considérée et de la positionner à un endroit quelconque.

Toutefois, pour certaines applications, il est apparu important, après avoir soulevé la claie supérieure et l'avoir dégagée de la pile, de la faire pivoter sur elle-même pour, ensuite, la positionner à l'endroit désiré, de sorte que les pieds (1c) soient orientés en direction du haut.
Dans ce but, selon cette trajectoire spécifique, les crochets (7) sont disposés sur la barre support en combinaison avec des pinces de serrage (9). Ces pinces de serrage (9), de tout type connu et approprié, sont actionnées après soulèvement et dégagement de la claie supérieure, de manière à enserrer la section des pieds (1b) (figures 5 et 9). Ces dispositions assurent le maintien de la claie pour son transfert par pivotement et retournement.

Bien évidemment, le robot manipulateur est assujetti à tout ensemble de commande et de programmation pour soumettre la tête manipulatrice équipée des crochets de préhension (7) avec, éventuellement, les pinces (9) à la trajectoire souhaitée :
- crochetage de la claie supérieure (figure 7),
- soulèvement de ladite claie (figure 8), avec éventuellement serrage des pinces (figure 9)
- transfert de la claie saisie vers un poste prédéterminé,
- dépose de la claie audit poste (figure 10).

Dans l'exemple illustré figure 1, à partir d'un convoyeur (C1) recevant une pile de claies, la claie supérieure est saisie et disposée, après retournement, vers un autre convoyeur (C2). Dans ce cas, le système de vision comprend une autre caméra (11) disposée dans la zone où doit être positionnée et déchargée la claie préalablement saisie.

A titre indicatif nullement limitatif, suite à des essais effectués à titre confidentiel, des résultats satisfaisants ont été obtenus pour des claies de dimensions 630 x 560 mm, avec une hauteur de pied de 65 à 85 mm, empilées sur une hauteur de 1350 mm, d'une manière en quinconce selon 7 décalages, le nombre de claies par pile étant de 90.

## Revendications

1. Dispositif pour désempiler des claies enchevêtrées disposées en quinconce, **caractérisé en ce qu'**il comprend un robot manipulateur (2) asservi à une caméra (5) positionnée pour balayer le dessus de la pile de claies afin de rechercher la claie supérieure et à une autre caméra (6) positionnée pour balayer la face de la pile de claie, comportant une zone de préhension (1b), afin de rechercher la claie immédiatement inférieure à la claie supérieure, afin de commander ledit robot (2) dont la tête manipulatrice est équipée de moyens (7) aptes à crocheter et à soulever ladite claie supérieure à partir de ladite zone.

2. Dispositif selon les revendications 1, **caractérisé en ce que** le système de vision comprend une autre caméra (11) disposée dans une zone où doit être positionnée et déchargée la claie préalablement saisie.

3. Dispositif selon la revendication 1, **caractérisé en ce que** la zone de préhension de chaque claie est constituée par des anneaux débordants (1b) à partir desquels sont formés des pieds (1c), lesdits anneaux (1b) étant positionnés à chaque extrémité de l'un au moins des côtés de la claie(1).

4. Dispositif selon l'une des revendications 1 à 3, **caractérisé en ce que** les moyens aptes à soulever la claie sont constitués par des crochets (7) disposés sur une barre support (8) selon un entraxe correspondant à l'écartement des pieds (1c) des claies, lesdits crochets (7) coopérant avec les anneaux (1b) que présente en débordement chaque pied, la barre (8) étant montée en bout du bras du robot manipulateur.

5. Dispositif selon la revendication 4, **caractérisé en ce que** la barre (8) support est montée en bout du bras avec capacité de pivotement.

6. Dispositif selon la revendication 4, **caractérisé en ce que** les crochets (7) sont combinés avec des mâchoires (9) faisant office de pinces et aptes à enserrer la section de chaque pied.

7. Dispositif selon l'une quelconque des revendications 1 à 6, **caractérisé en ce que** le robot (2) est assujetti à un ensemble de commande et de programmation pour soumettre la tête manipulatrice, à la trajectoire suivante :
- crochetage de la claie supérieure ;
- soulèvement de ladite claie ;
- transfert de la claie saisie vers un poste prédéterminé ;
- dépose de la claie audit poste.

8. Dispositif selon la revendication 7, **caractérisé en ce que** le transfert de la claie s'effectue par pivotement et retournement après serrage des pinces.

## Claims

1. Device for the unstacking of tangled racks arranged in staggered rows, **characterised in that** it includes a manipulating industrial robot (2) servocontrolled via a camera (5) positioned to scan the top of the pile of racks in order to locate the upper rack, and another camera (6) positioned to scan the face of the rack pile, comprising a grip zone (1b), in order to locate the rack immediately below the upper rack, in order to control said robot (2) whereof the handling head is fitted with means (7) capable of hooking onto and lifting said upper rack away from said zone.

2. Device as claimed in claim 1, **characterised in that** the vision system includes another camera (11) provided in a zone where the previously grabbed rack is to be positioned and unloaded.

3. Device as claimed in claim 1, **characterised in that** the grip zone of each rack comprises projecting rings (1b) from which are formed feet (1c), said rings (1b) being positioned at each end of at least one of the sides of the rack(1).

4. Device as claimed in one of claims 1 to 3, **characterised in that** the means for lifting the rack comprise hooks (7) provided on a support bar (8) according to a distance between centres corresponding to the spacing between the feet (1c) of the racks, said hooks (7) engaging with the rings (1b) projecting from each foot, the bar (8) being mounted at the end of the arm of the manipulating industrial robot.

5. Device as claimed in claim 4, **characterised in that** the support bar (8) is mounted at the end of the arm with pivoting capability.

6. Device as claimed in claim 4, **characterised in that** the hooks (7) are combined with jaws (9) that act as nippers and are capable of clasping the cross-section of each foot.

7. Device as claimed in any one of claims 1 to 6, **characterised in that** the robot (2) depends on a control and programming unit which subjects the handling head to the following trajectory:
- hooking onto the upper rack;
- lifting said rack;
- transferring the seized rack to a preset station;
- setting the rack down at said station.

8. Device as claimed in claim 7, **characterised in that** the rack is transferred by pivoting and turning over after the nippers are tightened.

## Patentansprüche

1. Vorrichtung zum Abstapeln von versetzt angeordneten ineinander verschachtelten Horden, **dadurch gekennzeichnet, dass** sie einen Greifroboter (2) umfasst, der mit einer Kamera (5) zusammenarbeitet, die so positioniert ist, um die Oberseite des Hordenstapels abzutasten und die obere Horde zu suchen, und mit einer anderen Kamera (6), die so positioniert ist, um die Vorderseite des Hordenstapels mit einer Greifzone (1b) abzutasten und die Horde zu suchen, die sich unmittelbar unter der oberen Horde befindet, um den besagten Roboter (2) zu steuern, dessen Greifkopf mit Einrichtungen (7) ausgestattet ist, die geeignet sind, sich ausgehend von der besagten Zone in die obere Horde einzuhaken und sie hochzuheben.

2. Vorrichtung nach Anspruch 1, **dadurch gekennzeichnet, dass** das Sichtsystem eine weitere Kamera (11) umfasst, die in einem Bereich angeordnet ist, in dem die zuvor ergriffene Horde positioniert und abgelegt werden soll.

3. Vorrichtung nach Anspruch 1, **dadurch gekennzeichnet, dass** die Greifzone jeder Horde aus zwei vorstehenden Ringen (1b) besteht, von denen aus Fußteile (1c) ausgebildet sind, wobei sich die besagten Ringe (1b) an jedem Ende mindestens einer Hordenseite (1) befinden.

4. Vorrichtung nach einem der Ansprüche 1 - 3, **dadurch gekennzeichnet, dass** die Einrichtungen zur Anhebung der Horde aus Haken (7) bestehen, die in einem dem Abstand der Fußteile (1c) der Horden entsprechenden Achsabstand auf einer Halteleiste (8) angeordnet sind, wobei die Haken (7) mit den Ringen (1b) zusammenwirken, die an jedem Fußteil vorstehen, während die Leiste (8) am Armende des Greifroboters angebracht ist.

5. Vorrichtung nach Anspruch 4, **dadurch gekennzeichnet, dass** die Halteleiste (8) schwenkbar am Ende des Armes angebracht ist.

6. Vorrichtung 4, **dadurch gekennzeichnet, dass** die Haken (7) mit Backen (9) kombiniert sind, die als Zangen dienen und geeignet sind, den Querschnitt jedes Fußteils zu umschließen.

7. Vorrichtung nach einem der vorhergehenden Ansprüche 1 - 6, **dadurch gekennzeichnet, dass** der Roboter (2) von einer Steuer- und Programmiereinheit abhängt, die den Greiferkopf den nachstehenden Bewegungsablauf beschreiben lässt:
- Einhaken der oberen Horde;
- Anheben der Horde;
- Verlagerung der Horde zu einer vorbestimmten Station;
- Ablage der Horde an der Station.

8. Vorrichtung nach Anspruch 7, **dadurch gekennzeichnet, dass** die Verlagerung der Horde nach dem Zupacken der Zangen durch eine Schwenk- und Umkehrbewegung erfolgt.
